# EUROPEAN PATENT SPECIFICATION

(11) **EP 2 869 527 B1**
(45) Date of publication and mention of the grant of the patent: **03.08.2016**
(21) Application number: 14187263.0
(22) Date of filing: 01.10.2014
(51) Int. Cl.: H04L 29/06

(54) **Method for extending application interface for future applications**
Verfahren zur Erweiterung einer Anwendungsschnittstelle für zukünftige Anwendungen
Procédé d'extension d'interface d'application pour des applications futures

(30) Priority: 05.11.2013 US 201361900357 P; 03.08.2014 US 201414450277
(43) Date of publication of application: 06.05.2015
(73) Proprietor: D2 Technologies Inc., Santa Barbara, CA 93101 (US)
(72) Inventor: Lindsay, David, Santa Barbara, CA 93105 (US)
(74) Representative: Becker Kurig Straus

(56) References cited:
- US-A1- 2008 126 541
- US-A1- 2012 221 725
- V1 Gsm Association: "GSM Association Non Confidential Official Document RCS 5.1: Services and Client Specification Rich Communication Suite 5.1 Advanced Communications Services and Client Specification Security Classification", , 13 August 2012 (2012-08-13), pages 1-100, XP55122342, Retrieved from the Internet: URL:http://www.gsma.com/network2020/rcs/sp ecs-and-product-docs/ [retrieved on 2014-06-10]

## Description

### Field of the Invention

This application relates to extending an application interface for future applications, and more specifically to tagging a Session Initiation Protocol (SIP) session on a mobile terminal to associate the SIP session with a specific application and SIP messages for the SIP session associated with and routed to the specific application according to the tag.

### Background of the Invention

Mobile service providers are interested in adding new third party application services to those pre-defined in the Global System for Mobile Communications Association (GSMA) Rich Communication Services (RCS) specifications. The RCS enhanced (RCS e) specification provides a mechanism for discovering new services by defining a tag which third parties can place in the capability message to announce support for a new service. However, the GSMA specification does not provide a mechanism that allows third party applications to leverage existing protocol stacks to support these new services.

U.S. Patent Application Publication No. US 2012/0221725 A1 describes a method and a corresponding system to control communication between applications that communication over a network. Different respective application identifiers (AppIDs) are designated for each of a multiplicity of application-to-application (A2A) enabled applications suitable for delivery of multimedia information. A registry is provided that includes authorized AppIDs and corresponding secret information. A request that originates from a first endpoint device requests authorization for a media connection over the network. The authorization request includes an AppID. In response to the authorization request, determining whether the AppID within the authorization request matches an authorized AppID indicated within the registry. The authorization request is rejected in response to a determination that the AppID does not match an authorized AppID indicated within the registry.

### Summary of the Invention

The invention is defined in claim 1. Particular embodiments are set out in the dependent claims.

In particular, a mechanism that allows third party applications to leverage existing protocol stacks to support new services in a mobile terminal is disclosed.

The mechanism includes a method of associating Session Initiation Protocol (SIP) messages with a specific application running on different user terminals. The method comprises tagging a SIP session to associate the SIP session with the specific application and associating SIP messages for the SIP session with the specific application according to the tag. The method further comprises utilizing a conduit manager to match SIP sessions to the specific application when there are multiple applications sharing a same SIP connection between the user terminals.

The method may further comprise tagging the SIP session to associate the SIP session with the specific application by modifying an existing element in a header of the SIP, tagging the SIP session to associate the SIP session with the specific application by adding a new element to a header of the SIP, tagging the SIP session to associate the SIP session with the specific application by adding a new method to the SIP protocol, tagging the SIP session to associate the SIP session with the specific application by adding a new element to Session Description Protocol (SDP) parameters negotiated by the SIP, tagging the SIP session to associate the SIP session with the specific application by modifying an existing element of SDP parameters when negotiating the SDP parameters of a SIP session wherein modifying the existing element of the SDP parameters negotiated by the SIP may comprise specifying the specific application as a session name when negotiating the SDP parameters of the SIP session, and/or by adding a new data or media type which is not one of pre-defined Rich Communication Services (RCS) data transactions by supplying additional parameters that describe the new data or media type in an SDP parameters section when initiating a new conduit or adding the new media data type to an existing conduit.

The method may further comprise modifying a legacy RCS application by adding a SIP session manager checking each SIP session to determine whether the SIP messages are intended for the legacy RCS application and routing the SIP messages intended for the legacy RCS application to said legacy RCS application and routing all remaining SIP messages to the conduit manager.

The method may further comprise adding a new data or media type which is not one of pre-defined RCS data transactions by supplying additional parameters that describe the new data or media type in an SDP parameters section when initiating a new conduit or adding the new media data type to an existing conduit.

The method may further comprise securing user terminals from unwanted RCS applications by each application holding a valid permission to access an RCS service.

### Brief Description of the Drawings

The invention is further illustrated by way of example, taking reference to the accompanying drawings. Thereof:
FIG. 1 illustrates a model of how current applications on two respective terminals communicate with one another,
FIG. 2 shows a model of how conduits provide a communication interface between applications on two different endpoints,
FIG. 3 is a call flow diagram showing the process of an application on one terminal starting a successful session on another terminal,
FIG. 4 is a call flow diagram showing the process of an application on one terminal unsuccessfully starting a session on another terminal,
FIG. 5 is a call flow diagram showing an example of how two applications share a new media type that is not core to RCS,
FIG. 6 illustrates multiple applications sharing the same SIP connection utilizing a Conduit Manager to match each conduit with the designated application,
FIG. 7 shows the addition of the Conduit Manager in-between the updated SIP session manger and new applications,
FIG. 8 is an example flow of modifying the SIP header to tag a session,
FIG. 9 is an example flow of adding a new method to the SIP protocol to tag a session,
FIG. 10 is an example flow of modifying SDP parameters when negotiating the SDP parameters of a SIP session to tag a session,
FIG. 11 is an example flow of adding a new element to the SDP parameters negotiated by SIP and/or modifying an existing SDP parameter to tag a session, and
FIG. 12 is an example flow of securing user terminals from unwanted RCS applications.

### Detailed Description

A mechanism that allows third party applications to leverage existing protocol stacks to support new services is disclosed.

The requirements for such a mechanism should include the following:
1. Applications can share the same underlying Session Initiation Protocol (SIP) protocol stack.
2. Application data can be exclusively designated for individual applications.
3. Data and protocols for one application must be protected from access by other applications. This is particularly important for sensitive core protocols.
4. A high level Application Programming Interface (API) must be available so that the application developer does not need to know the underlying protocols for standard RCS features, and such an API must be easy for the developer community to adopt.
5. Furthermore, changes to existing RCS applications must be minimized.

### Private SIP Stack

In one approach, every application has its own SIP stack. Every application registers its own SIP stack with the Internet Protocol Multimedia Subsystem (IMS) server. So if the terminal has a separate application for Voice over Internet Protocol (VoIP) and another one for Instant Messaging (IM), there would be two registrations for the terminal. Since service providers do not want to support IMS servers that support multiple registrations for a terminal, this approach will not be acceptable to most networks. This approach does not meet any of the first three requirements listed above.

### Sharing SIP Stack

A GSMA working group has proposed a solution to GSMA. Their approach is to provide an API to give direct access to the SIP protocol. This meets the first requirement listed above, viz. allowing multiple applications to share the same SIP protocol. However, it fails to meet the other equally important requirements:
1. The SIP stack has no way to notify the mobile terminal that a new incoming session and its contents are intended for a specific application. (viz. it fails requirement 2 above.)
2. Since all applications have the same access to the SIP stack, a third party application can manipulate data or control intended for a more secure application (viz. it fails requirement 3 above).
3. Application developer must fully understand SIP. This leads to longer development, integration and test times (viz. it fails the 4th requirement listed above).
4. There are already a number of SIP APIs in use and numerous applications developed for those API. It will be difficult to convince an entire industry to adopt a single API and port their applications to this new API (viz. it fails to meet the 5th requirement above).

RCS defines a number of user activities (e.g. voice calling, IM). The RCS standard requires SIP to manage sessions that support these activities. Each activity has a set of pre-defined characteristics. SIP allows the session endpoints to negotiate these characteristics. For example, a video call requires that the end points negotiate audio and video stream characteristics, such as codec type and video frame rates.

A user (application) session (e.g. a video call, IM conversation) may consist of one or more SIP sessions. For a voice call, the user (application) session exactly coincides with the SIP session. When the SIP session ends, the call terminates. In IM, a user application session (conversation) may consist of many sequential and possibly overlapping SIP sessions.

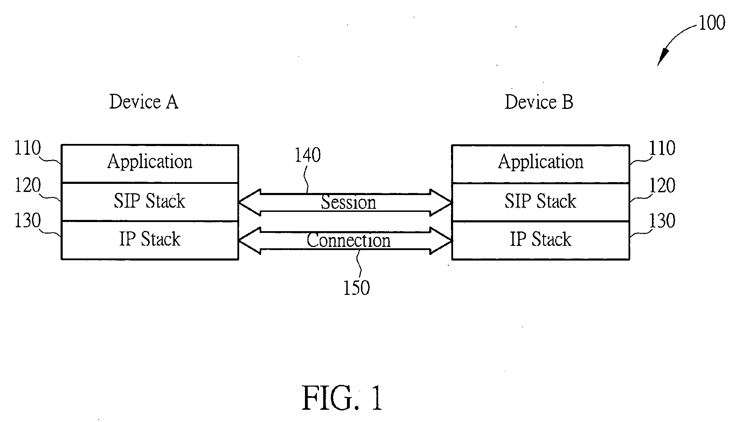

FIG. 1 illustrates a model 100 of how current applications 110 on respective terminals A and B communicate with one another. Each of Terminal A and B comprises an Application 110, a SIP Stack 120, and an Internet Protocol (IP) Stack 130. The applications 110 communicate with each other using a SIP Session 140 managed over an IP Connection 150.

### Conduits

The communications between applications are often referred to as user or application sessions. In order to differentiate between a user session and a SIP session, the concept of virtual user (application) sessions between two endpoints as conduits is introduced.

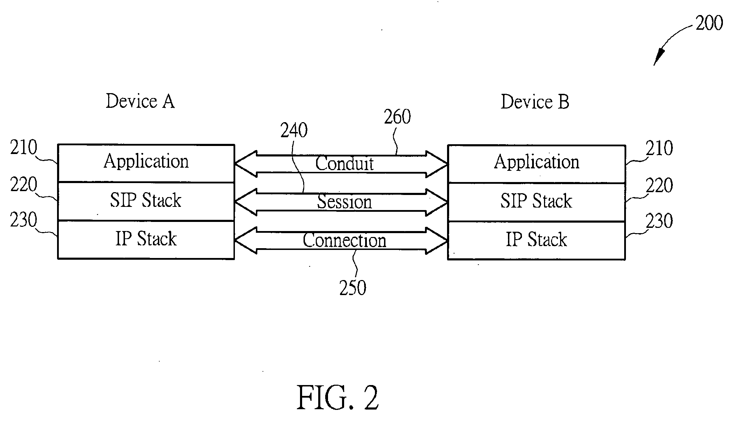

FIG. 2 shows a model 200 of how conduits 260 provide a communication interface between applications 210 on two different endpoints, one endpoint on Terminal A and another endpoint on Terminal B. Each of Terminal A and B comprises an Application 210, a SIP Stack 220, and an IP Stack 230. A conduit 260 manages the SIP sessions 240 which manage the underlying IP connections 250.

Conduits manage communications between two specific applications. For example, a video calling conduit manages communications between two video calling applications. In order for each terminal receiving a conduit to know the intended application, each conduit contains information that identifies the intended application. This information is transported between conduit endpoints using the SIP protocol.

There are several ways for SIP to transport this information:
1. Modify an existing element in the SIP header.
2. Add a new element to the SIP header.
3. Add a new Method to the SIP protocol.
4. Add a new element to the Session Description Protocol (SDP) parameters negotiated by SIP.
5. Modify an existing SDP parameter.

Any of the methods 1-5 mentioned above would provide the necessary application information. However, it is preferred that the approach selected will not require major changes to the SIP stack or its usage. The approach that requires the least amount of changes to existing protocol and application software is to modify an existing SDP parameter. Using this approach does not require any changes to the SIP stack or how it negotiates SDP parameters and is described in more detail later.

### RCS Data Transactions using Conduits

Data transactions used by an RCS application can be classified as one of the following types.
1. Real-time data streaming
2. Short messages
3. File transfer

Furthermore, RCS defines two types of data streaming: voice and video.

These standard transactions form the core applications in RCS.
1. Voice calling uses real-time voice streaming.
2. Video calling uses both real-time voice streaming and real-time video streaming.
3. Short Message Service (SMS) and IM uses short messages and file transfer.
4. File transfer uses file transfer.
5. Content Sharing uses real-time video streaming and file transfer.

These transactions are typically grouped into applications. For example, voice and video streaming are managed by a call manager application. An application managing these transactions on one terminal communicates with its peer on another terminal using a conduit.

Conduits can be extended to handle new applications and new types of data as it will be shown below.

### Extending Conduits for New Applications

In current approaches to RCS applications, applications are defined by the types of data that they use. Using this approach, voice and video streaming are managed by a call manager application. As an illustration of a call manager application, short text messages are handled by a messaging application.

One problem with this approach is that new applications cannot use the same data transactions already used by existing applications. For example, a chess application cannot use short messages to communicate its moves. In the current model, the new application must create its own protocol and its own new data type, and separate registration with the RCS server. Alternatively, the new application has to be trusted to share all messages with the existing messaging application and have full access to the SIP stack for all other applications. The limitations of these two approaches are discussed in a previous section.

By using conduits, multiple applications can securely share the same data transactions. When necessary, even new data transactions can be added. The following sections describe how new applications can be added.

### New Applications using Existing Data Transaction

New applications can share the same types of transactions by creating separate conduits. For example, a specific IM conduit is created for a chess game. In order for both sides of the conduit to know the intended application, the protocols underlying a conduit must communicate the intended application of the conduit.

A preferred method for communicating the intended application for the conduit, as discussed above, is to use an existing field in the SDP section of the SIP invitation: session name. Although the session name is a mandatory field, it is not currently used when negotiating the session description parameters of a SIP session. Existing applications, voice/video calling, IM, etc. could set the session name as they do now: filling it with a single space. New applications can set the session name with the tag used to perform a capability exchange. By tagging the SIP sessions this way, the conduit can direct SIP session data to the designated application.

There are already RCS specifications for exchanging capabilities. In order for media types to be shared between applications, one proposal for signaling that a session is associated with a particular application is outlined here. This is done by specifying the application as the session name.

The following example extends the media section by adding a new session name specifying the chess application.
s=chess_application_tag
m=audio 49170 RTP/AVP 0
m=message 9 TCP/MSRP *

If the application has a new stream data type, it can be added using a media section similar to the following.
s=my_game_tag
m=audio 49170 RTP/AVP 0
m=game.stream 51002 RTP/GP 0

This technique is illustrated by way of the following example.

An application developer wants to add a new chess game which requires simple short messages to be communicated between the two players to convey moves on a chessboard. The short messages used by the Messaging application for IM and SMS can be used to communicate the chess moves. However, the chess moves must not appear in the Messaging application. This can be achieved by creating a new conduit for the Chess application as follows.

When a user wants to initiate a chess session with a specific user, the application requests a conduit for the chess game. The protocol engine checks to see if that user's terminal supports a chess capability according to the GSMA RCS-e specification. If the remote terminal supports the chess capability, the protocol engine initiates a SIP session. The SDP description provides a session name that indicates that the SIP session is intended for the chess application.

The remote terminal receives the SIP invitation with the SDP session name of the chess application. The protocol engine on the remote terminal notifies listeners that an incoming chess conduit was received. The chess application receives the notification. It gives the user the option to accept the new conduit. If the user accepts the conduit, the application starts the game using short messages. Since these messages are designated for the chess game, they will not appear in the messaging application.

The chess application idea can further be extended to support voice conversations between terminals. All that is needed is to add the voice media to the conduit. The underlying protocol engine will negotiate the voice call. Since voice calling is already supported as a core RCS function, the voice engine can be managed in this conduit exactly the same way as a voice call.

Using the approach of using a conduit described above, all of the requirements listed above for a third party application are satisfied. In contrast, the GSMA working group proposal would fail to satisfy all but the first requirements listed earlier.

Earlier versions of the Android Operating System (OS) provided a method for sharing messages across different applications: the ordered broadcast technique. To use an ordered broadcast, each application registers to listen for a specific broadcast intent with a specific priority. When a message is available for this intent, each application is notified based on the request priority. Any application in the priority chain can consume the message and prevent lower priority applications from receiving the message. This turned out to be a fatal security defect. This defect is addressed in Android 4.4 (Kit Kat) which allows only one application to receive SMS messages. This application can be selected by the user. With this update, messages can no longer be shared by different applications.

Two call flows showing a successful and unsuccessful negotiation of a conduit are presented here for the Chess Game example. The following application flows assume that two clients are connected and registered.

### Successful Session Negotiation

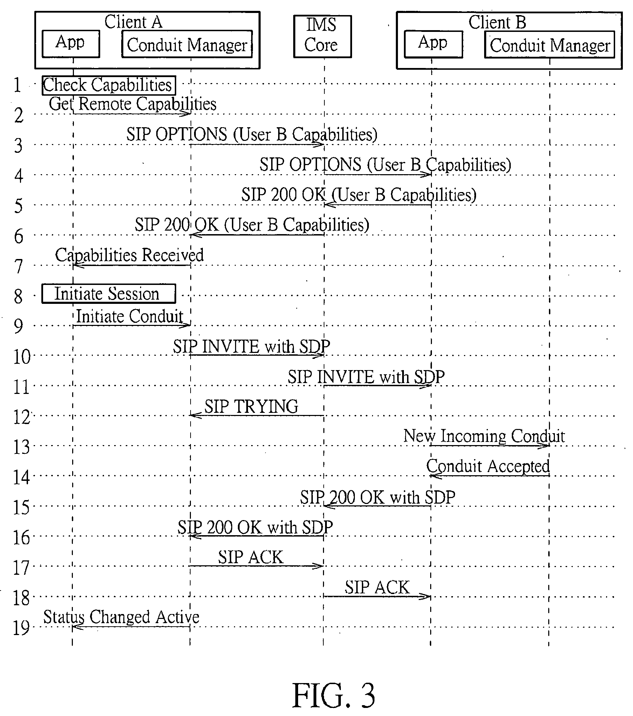

FIG. 3 is a call flow diagram showing the process of an application on one terminal starting a session on another terminal with step numbers corresponding to the same step numbers shown in FIG. 3.
1. Use the standard discovery mechanism to get the remote parties capabilities.
2. The application makes a request to the Conduit Manager to get the remote capabilities of the specified user.
3. The Conduit Manager makes the request to the IMS core.
4. The IMS core relays the request to Conduit Manager running on the remote client.
5. The Conduit Manager replies to the request with Client B's capabilities.
6. The IMS core relays the response to Client A.
7. The Conduit Manager notifies the application that capabilities were received.
8. If User B has the capability to support this application, a new session is initiated.
9. The application creates a new conduit with the applicable media.
10. The Conduit Manager initiates the session by sending an invite
11. The IMS core relays the invitation to User B.
12. The IMS core lets User A know that the invitation was sent with a SIP trying response.
13. The Conduit Manager lets the application know that there was a new incoming conduit for the specified application.
14. The application accepts the conduit.
15. The Conduit Manager on terminal B responds with an OK response.
16. The IMS core relays the response to terminal A.
17. Terminal A sends an acknowledgement to Terminal B.
18. The IMS core relays the acknowledgement to Terminal B.
19. The Conduit Manager signals the application that the conduit is now active and media can be exchanged.

### Unsuccessful SDP Negotiation

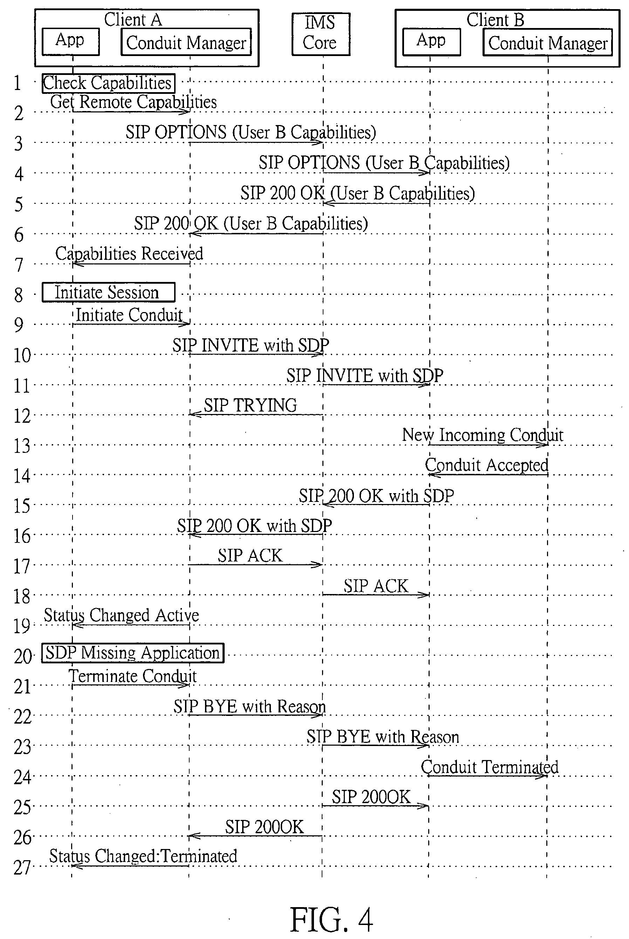

FIG. 4 is a call flow diagram showing the process of an application on one terminal unsuccessfully starting a session on another terminal with step numbers corresponding to the same step numbers shown in FIG. 4. In this example call flow, the clients successfully exchange capabilities. Client B does not accept the SDP message. This is detected by Client A and the session is terminated.
1. Use the standard discovery mechanism to get the remote parties capabilities.
2. The application makes a request to the Conduit Manager to get the remote capabilities of the specified user.
3. The Conduit Manager makes the request to the IMS core.
4. The IMS core relays the request to the Conduit Manager running on the remote client.
5. The Conduit Manager replies to the request with Client B's capabilities.
6. The IMS core relays the response to Client A.
7. The Conduit Manager notifies the application that capabilities were received.
8. If User B has the capability to support this application, a new session is initiated.
9. The application creates a new conduit with the applicable media. This new media is described as SDP media and attributes.
10. The Conduit Manager initiates the session by sending an invite. This invitation contains a description of any standard media requested by the new media.
11. The IMS core relays the invitation to User B.
12. The IMS core lets User A know that the invitation was sent with a SIP trying response.
13. The Conduit Manager lets the application know that there was a new incoming conduit for the specified application.
14. The application accepts the conduit.
15. The Conduit Manager on terminal B responds with an OK response. Because of a mismatch in supported media, the client B response does not include the new media description.
16. The IMS core relays the response to terminal A.
17. Terminal A sends an acknowledgement to Terminal B.
18. The IMS core relays the acknowledgement to Terminal B.
19. The Conduit Manager signals the application that the conduit is now active and media can be exchanged.
20. The application analyzes the response and sees that the new media was not accepted.
21. The application terminates the conduit.
22. The Conduit Manager sends a BYE message with the reason that media was not supported.
23. The IMS core relays this message to client B.
24. The Conduit Manager on client B tells the application that the conduit is terminated.
25. The Conduit Manager acknowledges the BYE message with a SIP OK response.
26. The IMS core relays the message.
27. The conduit is terminated.

### Extending conduits for a New Data Transaction Type

In addition to sharing standard RCS data transactions between applications, an application can introduce a new type of data transaction that is not core to RCS. In this case, the application is required to manage this new type of stream. The conduit interface allows for a new data streaming media type with an extensible description of the stream. This can be accomplished by having the application supply additional parameters that describe the new media type for the SDP section. These parameters can be used when initiating a new conduit or adding the new mediadata type to an existing conduit.

When the remote party creates a new conduit that requires a description of the new streaming data type, the conduit reports the parameters to the application for this media.

This approach allows an application to support a new type of streaming data without the need to modify the protocol engine or access the SIP stack directly.

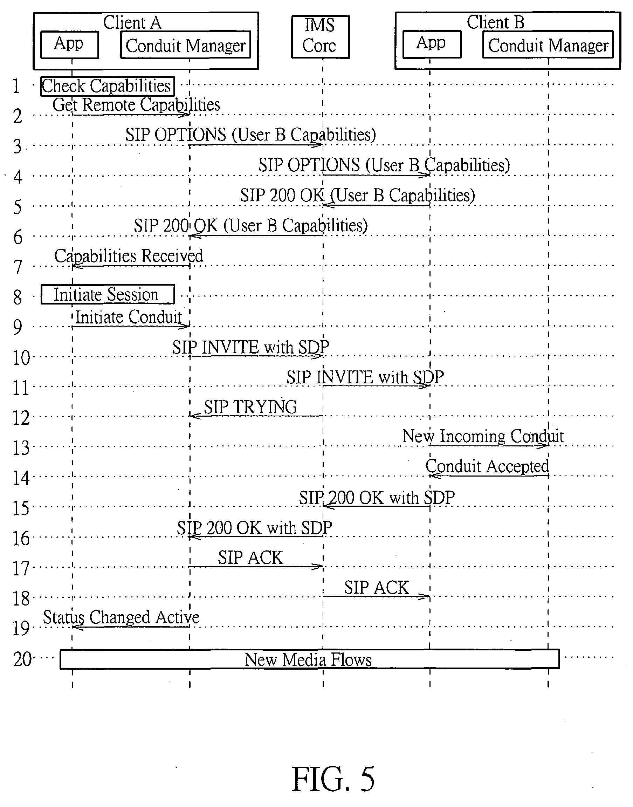

FIG. 5 is a call flow diagram showing an example of how two applications can share a new media type that is not core to RCS with step numbers corresponding to the same step numbers shown in FIG. 5.
1. Use the standard discovery mechanism to get the remote parties capabilities.
2. The application makes a request to the Conduit Manager to get the remote capabilities of the specified user.
3. The Conduit Manager makes the request to the IMS core.
4. The IMS core relays the request to CSI running on the remote client.
5. The Conduit Manager replies to the request with Client B's capabilities.
6. The IMS core relays the response to Client A.
7. The Conduit Manager notifies the application that capabilities were received.
8. If User B has the capability to support this application, a new session is initiated.
9. The application creates a new conduit with the applicable media. When creating this conduit, a new media type is described.
10. The Conduit Manager initiates the session by sending an invite. The invitation contains a description of the new media type.
11. The IMS core relays the invitation to User B.
12. The IMS core lets User A know that the invitation was sent with a SIP trying response.
13. The Conduit Manager lets the application know that there was a new incoming conduit for the specified application.
14. The application accepts the conduit.
15. The Conduit Manager on terminal B responds with an OK response.
16. The IMS core relays the response to terminal A.
17. Terminal A sends an acknowledgement to Terminal B.
18. The IMS core relays the acknowledgement to Terminal B.
19. The Conduit Manager signals the application that the conduit is now active and media can be exchanged.
20. Client A can now send media based on the new type to client B.

### Supporting Multiple Applications with Conduits

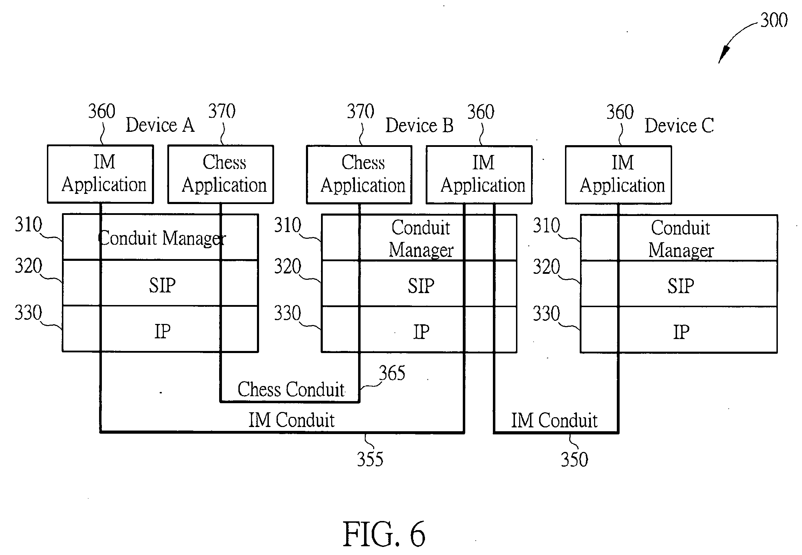

The previous sections showed how conduits can be used to associate applications with different data types. When there are multiple applications sharing the same SIP connection, a conduit manager is added to match each conduit with the designated application, as shown in FIG. 6. Each of terminals A, B, and C comprise at least one application 360 and/or 370, a conduit manager 310, a SIP Stack 320, and an IP Stack 330. Obviously FIG.6 is just an example which could be applied to any number of terminals, conduits, and/or applications without departing from the scope of the claims.

In FIG. 6, the user of Terminal A is playing chess 370 against the user of Terminal B and messaging 360 to that user of Terminal B at the same time. The conduit manager 310 provides and maintains a chess conduit365 between the chess applications 370 and an IM conduit 355 between the IM applications 360 on those two terminals A and B. If the user on Terminal B also has an IM conversation with the user on Terminal C, the conduit manager 310 on Terminal B would provide and maintain an IM conduit 350 between the IM applications 360 on terminals B and C.

### Adding new applications to a legacy RCS application

It has been shown above how multiple applications can be supported on a single SIP stack using Conduits. However, a large body of existing RCS applications and SIP applications already exist. One of the benefits of using Conduits is that legacy RCS and SIP applications (that do not use Conduits) can interoperate with applications that support conduits. Furthermore, new applications can be added to legacy SIP applications with minimal or no impact on the legacy applications. Details are provided in the following sections.

### Interoperate with Legacy Applications (without Conduit Support)

If the RCS application does not support conduits, the terminal is limited to the core RCS applications that it supports. When a remote terminal requests such a terminal to create a session with an unsupported application, capability discovery will reject such requests. However, a request from a legacy RCS application will be accepted and will function properly without any modification to the legacy application or underlying SIP stack.

### Adding Conduit Support to a Legacy Application

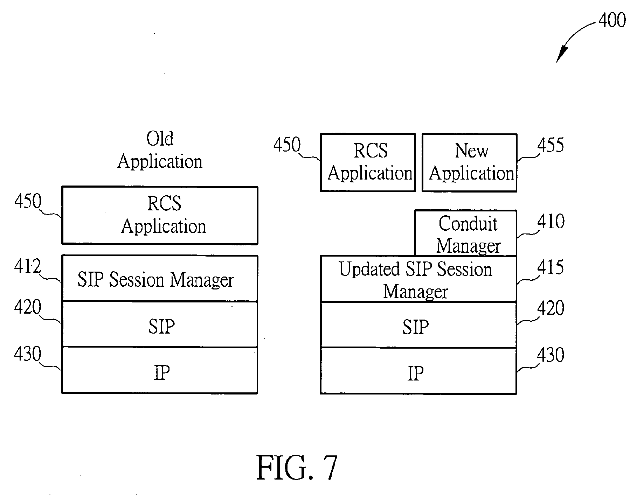

In order to add conduit support to an existing application, the portion of the SIP application that manages SIP sessions can be modified to include a new SIP session manager. The session manager checks each session for the intended application. The session name would remain empty (unused) for legacy RCS data transactions. All sessions for the legacy RCS application would be routed by the SIP session manager to the RCS application. The remaining sessions would be routed to the Conduit Manager. FIG. 7 shows the addition 400 of the Conduit Manager 410 in-between the updated SIP session manger 415 and the new applications and can be used to Support Third Party Applications.

The left side of FIG. 7 shows a terminal comprising an old application, an RCS application 450, a SIP Session Manager 412, a SIP Stack 420, and an IP Stack 430. The terminal on the left side of FIG. 7 can be modified to add conduit support to a Legacy Application as shown in the terminal on the right side of FIG. 7. The terminal on the right side of FIG. 7 comprises the new application 455, the RCS application 450, a Conduit Manager 410, an updated SIP session Manager 415, a SIP Stack 420, and an IP Stack 430.

With the addition a Conduit Manager 410, the original SIP session manager interfaces 412 are preserved. This means that the existing RCS application 450 will continue to work without any change. New applications 455, however, must use the software interfaces supplied by the conduit manager 410. This allows the new application 455 to share the same SIP stack 430 and registration as the legacy application.

Alternative to using conduits: If the application developer does not want to use conduits for new applications, the new applications can still share the same SIP connection and software stack with such applications. This is accomplished by providing an application interface that replaces the conduit features. The key conduit interoperability features that must be included for such an interface are:
1. The intended application is communicated using the session name parameter in the SDP message.
2. The application interface must allow new applications to add new media types to a SIP session.

### Securing Conduits under the Android OS

Android security is based on the following concepts.
1. Android Application Sandbox. Each data and code execution of each application is isolated from other applications by the sandbox.
2. All applications are signed by a certificate.
3. Android permissions can be used to control access to data and code execution on a per-application basis.

Application developers use Android Services to perform long running background operations in the background. Since SIP sessions can be long running background operations, developers implement the SIP session manager and SIP stack either as an RCS service or as a native application accessed from an RCS service. Applications communicate with the SIP stack using the Android IBinder interface to the RCS service.

When applications use conduits, the conduits communicate with the RCS service. In order to secure conduits, the IBinder interface to the RCS service must be secured.

When a mobile terminal (phone) manufacturer ("OEM") loads software on to the mobile terminal (phone,) all of the permitted applications and services are signed by the OEM key. If RCS applications and the RCS service are signed by the same key, the IBinder interface to the RCS service is easily secured. This can be done either by the RCS application and RCS service sharing the same process, or the RCS service checking that the communication is coming from the RCS application.

In order to provide third party applications (not signed by the OEM) access to conduits, the RCS service must be able to determine which application should have access to the service. A combination of permissions and certificate validations can be used to restrict applications to all or a subset of the conduit interface. The following sections describe different approaches to securing the conduit interface.

### Android Permissions

The most basic approach is to require that each application hold a valid permission to access the RCS service. If the permission is marked as "dangerous", the user determines whether to install the application and give it access to the RCS service.

### Certificate Validation

Each application is signed by a certificate. The RCS service can check the certificate. If the certificate matches the OEM certificate, the application is granted full access to all interfaces supported by the RCS service. If the application does not the OEM certificate, access will be determined by security policy, which may grant restricted access to the third party application.

For higher level of security, the certificate could be checked against a known good list (white list) and against a known bad list (black list). If the certificate is not on either list, the security policy would dictate access. The white and black list should be updatable dynamically. An up-to-date list ensures that bad applications do not get access to the RCS service.

### Application Validation

Because conduits contain the identity of the application, the conduit security could restrict conduits to specific applications. The security manager within the RCS service would need to manage which certificates can be associated with which types of conduits.

### Implementation of Conduits

As previously stated, conduits manage communications between two specific applications. For each terminal receiving a conduit to know the intended application, each conduit contains information that identifies the intended application. This information is transported between conduit endpoints using the SIP protocol and there are several ways for SIP to transport this information. A preferred method of associating SIP messages with a specific application running on different user terminals includes tagging a SIP session to associate the SIP session with the specific application and associating SIP messages for the SIP session with the specific application according to the tag.

The tagging of the SIP session can be accomplished in several ways such as, *inter alia*, by modifying an existing element in the SIP header, adding a new element to the SIP header, adding a new Method to the SIP protocol, adding a new element to the SDP parameters negotiated by SIP, and/or by modifying an existing SDP parameter.

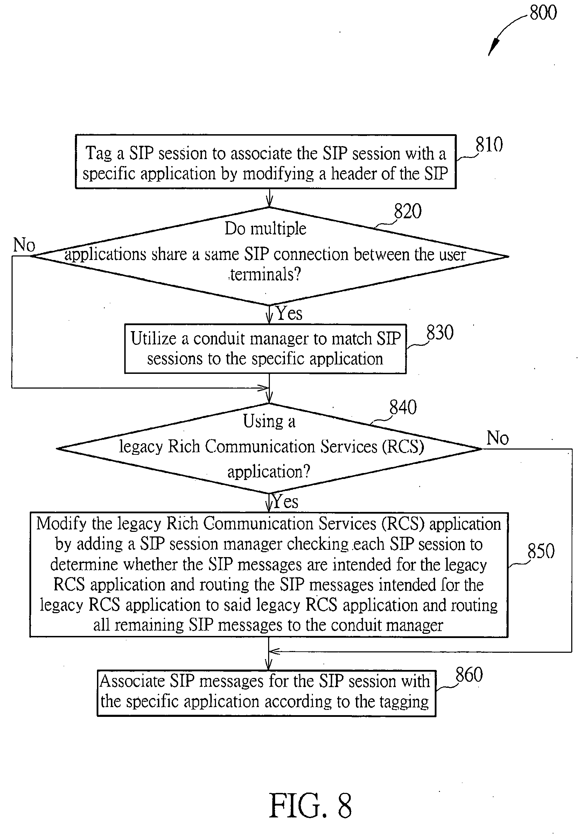

FIG. 8 is an example flow 800 of modifying the SIP header to tag a session. The SIP header can have an existing element modified and/or have new element added to the SIP header. The steps in flow 800 may include the following steps, but one or more of steps 820-850 may be optional depending upon implementation and circumstances:
STEP 810: Tag a SIP session to associate the SIP session with a specific application by modifying a header of the SIP.
STEPs 820, 830: Utilize a conduit manager to match SIP sessions to the specific application when there are multiple applications sharing a same SIP connection between the user terminals.
STEPs 840, 850: When using a legacy RCS application, modify the legacy RCS application by adding a SIP session manager checking each SIP session to determine whether the SIP messages are intended for the legacy RCS application and routing the SIP messages intended for the legacy RCS application to said legacy RCS application and routing all remaining SIP messages to the conduit manager.
STEP 860: Associate SIP messages for the SIP session with the specific application according to the tagging.

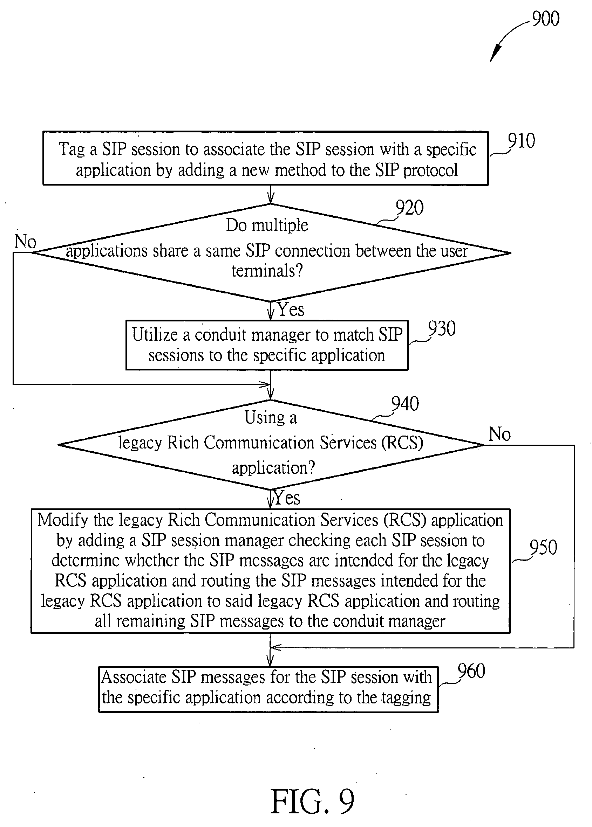

FIG. 9 is an example flow 900 of adding a new method to the SIP protocol to tag a session. The steps in flow 900 may include the following steps, but one or more of steps 920-950 may be optional depending upon implementation and circumstances:
STEP 910: Tag a SIP session to associate the SIP session with a specific application by adding a new method to the SIP protocol.
STEPs 920, 930: Utilize a conduit manager to match SIP sessions to the specific application when there are multiple applications sharing a same SIP connection between the user terminals.
STEPs 940, 950: When using a legacy RCS application, modify the legacy RCS application by adding a SIP session manager checking each SIP session to determine whether the SIP messages are intended for the legacy RCS application and routing the SIP messages intended for the legacy RCS application to said legacy RCS application and routing all remaining SIP messages to the conduit manager.
STEP 960: Associate SIP messages for the SIP session with the specific application according to the tagging.

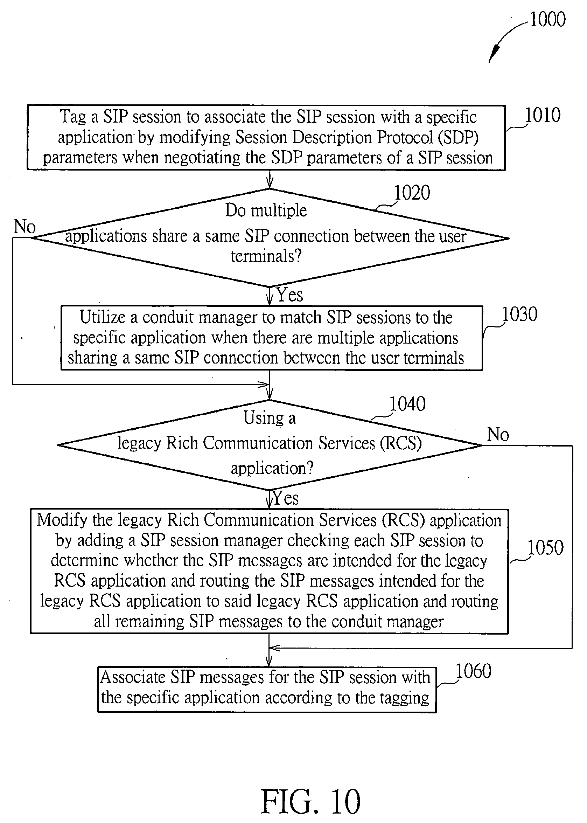

FIG. 10 is an example flow 1000 of modifying SDP parameters when negotiating the SDP parameters of a SIP session to tag a session. The steps in flow 1000 may include the following steps, but one or more of steps 1020-1050 may be optional depending upon implementation and circumstances:
STEP 1010: Tag a SIP session to associate the SIP session with a specific application by modifying SDP parameters when negotiating the SDP parameters of a SIP session.
STEPs 1020, 1030: Utilize a conduit manager to match SIP sessions to the specific application when there are multiple applications sharing a same SIP connection between the user terminals.
STEPs 1040, 1050: When using a legacy RCS application, modify the legacy RCS application by adding a SIP session manager checking each SIP session to determine whether the SIP messages are intended for the legacy RCS application and routing the SIP messages intended for the legacy RCS application to said legacy RCS application and routing all remaining SIP messages to the conduit manager.
STEP 1060: Associate SIP messages for the SIP session with the specific application according to the tagging.

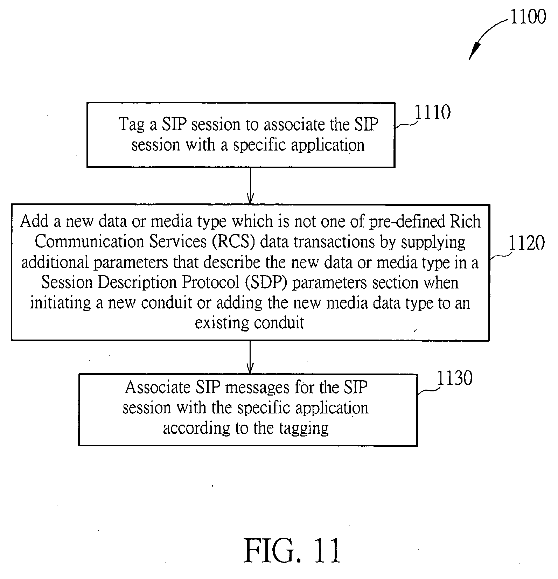

FIG. 11 is an example flow 1100 of adding a new element to the SDP parameters negotiated by SIP and/or modifying an existing SDP parameter to tag a session. The steps in flow 1100 may include the following steps, but step 1120 may be optional depending upon implementation and circumstances:
STEP 1110: Tag a SIP session to associate the SIP session with a specific application.
STEP 1120: Add a new data or media type which is not one of pre-defined RCS data transactions by supplying additional parameters that describe the new data or media type in a SDP parameters section when initiating a new conduit or adding the new media data type to an existing conduit.
STEP 1130: Associate SIP messages for the SIP session with the specific application according to the tagging.

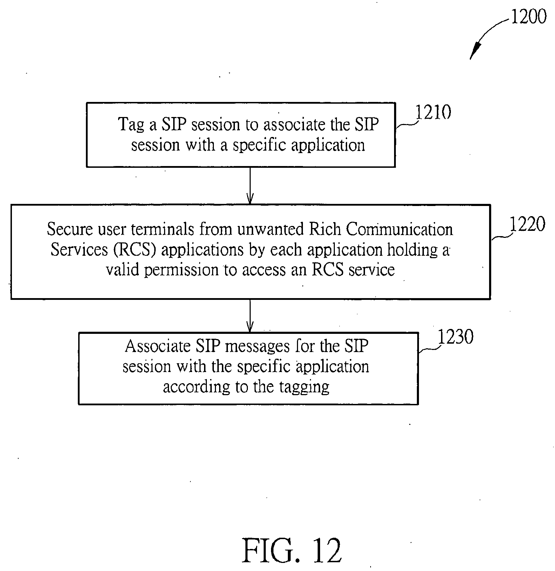

FIG. 12 is an example flow 1200 of securing user terminals from unwanted RCS applications. The steps in flow 1200 may include the following steps, but step 1220 may be optional depending upon implementation and circumstances:
STEP 1210: Tag a SIP session to associate the SIP session with a specific application.
STEP 1220: Secure user terminals from unwanted RCS applications by each application holding a valid permission to access an RCS service.
STEP 1230: Associate SIP messages for the SIP session with the specific application according to the tagging.

Any of the above flows 800-1200 may be implemented independently or in combination with any other flow(s) 800-1200 and/or any methods described herein according to design considerations without departing from the invention.

### Summary

A secure and developer friendly approach for extending RCS to support new applications is here presented. This approach leverages the core data transactions by allowing new applications to use the same data transactions without interfering with the existing applications. In addition, new types of data transactions can be supported without giving application access to low level protocols that can cause portability and security concerns and existing applications and protocol stacks can easily be extended to use the techniques described above.

## Claims

1. A method of associating Session Initiation Protocol messages with a specific application (210, 360, 370, 455) running on different user terminals, the method comprising:
tagging (810, 910, 1010, 1110, 1210) a Session Initiation Protocol session (140, 240) to associate the Session Initiation Protocol session (140, 240) with the specific application (110, 210, 360, 370, 455) by modifying an existing element of Session Description Protocol parameters when negotiating the Session Description Protocol parameters of the Session Initiation Protocol session (140, 240);
utilizing (830, 930, 1030) a conduit manager (310, 410) to match Session Initiation Protocol sessions (140, 240) to the specific application (110, 210, 360, 370, 455) when there are multiple applications (110, 210, 360, 370, 455) sharing a same Session Initiation Protocol session between the user terminals; and
associating (860, 960, 1060, 1130, 1230) Session Initiation Protocol messages for the Session Initiation Protocol session (140, 240) with the specific application (110, 210, 360, 370, 455) according to the tag.

2. The method of claim 1, wherein the tagging (810) of the Session Initiation Protocol session (140, 240) to associate the Session Initiation Protocol session (140, 240) with the specific application (110, 210, 360, 370, 455) further comprises modifying an existing element in a header of the Session Initiation Protocol.

3. The method of claim 1, wherein the tagging (910) of the Session Initiation Protocol session (140, 240) to associate the Session Initiation Protocol session (140, 240) with the specific application (110, 210, 360, 370, 455) further comprises adding a new element to a header of the Session Initiation Protocol.

4. The method of claim 1, wherein the tagging (910) of the Session Initiation Protocol session (140, 240) to associate the Session Initiation Protocol session (140, 240) with the specific application (110, 210, 360, 370, 455) further comprises adding a new method to the Session Initiation Protocol.

5. The method of claim 1, wherein the tagging (1010) of the Session Initiation Protocol session (140, 240) to associate the Session Initiation Protocol session (140, 240) with the specific application (110, 210, 360, 370, 455) further comprises adding a new element to Session Description Protocol parameters negotiated by the Session Initiation Protocol.

6. The method of claim 1, wherein the modification of the existing element of the Session Description Protocol parameters negotiated by the Session Initiation Protocol comprises specifying the specific application (110, 210, 360, 370, 455) as a session name when negotiating the Session Description Protocol parameters of the Session Initiation Protocol session (140, 240).

7. The method of any of claims 1-6 further comprising adding (1120) a new data or media type which is not one of pre-defined Rich Communication Services data transactions by supplying additional parameters that describe the new data or media type in a Session Description Protocol parameters section when initiating a new conduit or adding the new media data type to an existing conduit.

8. The method of any of claims 1-7 further comprising securing (1220) user terminals from unwanted Rich Communication Services applications by each application holding a valid permission to access a Rich Communication Services service.

9. The method of any of claims 1-8 further comprising modifying (950, 1050) a legacy Rich Communication Services application (450) by adding a Session Initiation. Protocol session manager (415) checking each Session Initiation Protocol session (140, 240) to determine whether the Session Initiation Protocol messages are intended for the legacy Rich Communication Services application (450) and routing the Session Initiation Protocol messages intended for the legacy Rich Communication Services application (450) to said legacy Rich Communication Services application (450) and routing all remaining Session Initiation Protocol messages to the conduit manager (310, 410).

10. The method of claim 9, wherein the specific application (210, 360, 370, 455) and the legacy Rich Communication Services application (450) share the same Session Initiation Protocol stack (420) and registration.

11. A device configured to perform the method of any of claims 1-10.

## Patentansprüche

1. Verfahren zur Assoziierung von Session-Initiation-Protokoll-Nachrichten mit einer bestimmten Anwendung (210, 360, 370, 455), die auf verschiedenen Benutzer-Terminals läuft, welches umfasst:
Tagging (810, 910, 1010, 1110, 1210) einer Session-Initiation-Protokoll-Sitzung (140, 240), um die Session-Initiation-Protokoll-Sitzung (149, 210) mit der bestimmten Anwendung (110, 210, 360, 370, 455) zu assoziieren, indem ein vorhandenes Element von Session-Beschreibungs-Protokoll-Parametern modifiziert wird, wenn die Session-Beschreibungs-Protokoll-Parameter der Session-Initiation-Protokoll-Sitzung ausgehandelt werden,
Verwenden (830, 930, 1030) eines Verbindungsmanagers (310, 410), um Session-Initiation-Protokoll-Sitzungen (140, 240) an bestimmte Anwendungen (110, 210, 360, 370, 455) anzupassen, wenn mehrere Anwendungen (110, 210, 360, 370, 455) vorhanden sind, die eine gleiche Session-Initiation-Protokoll-Sitzung zwischen den Benutzer-Terminals teilen; und
Assoziieren (860, 960, 1060, 1130, 1230) von Session-Initiation-Protokoll-Nachrichten für die Session-Initiation-Protokoll-Sitzung (140, 240) mit der bestimmten Anwendung (110, 210, 360, 370, 455) gemäß dem Tag.

2. Verfahren nach Anspruch 1, wobei das Tagging (810) der Session-Initiation-Protokoll-Sitzung (140, 240) zur Assoziierung der Session-Initiation-Protokoll-Sitzung (140, 240) mit der bestimmten Anwendung (110, 210, 360, 370, 455) weiter umfasst, Modifizieren eines bestehenden Elements eine einem Header des Session-Initiation-Protokolls.

3. Verfahren nach Anspruch 1, wobei das Tagging (910) der Session-Initiation-Protokoll-Sitzung (140, 240) zur Assoziierung der Session-Initiation-Protokoll-Sitzung (140, 240) mit der bestimmten Anwendung (110, 210, 360, 370, 455) weiter umfasst, Eingeben eines neuen Elements in einem Header des Session-Initiation-Protokolls.

4. Verfahren nach Anspruch 1, wobei das Tagging (910) der Session-Initiation-Protokoll-Sitzung (140, 240) zur Assoziierung der Session-Initiation-Protokoll-Sitzung (140, 240) mit der bestimmten Anwendung (110, 210, 360, 370, 455) weiter umfasst, Eingeben neuen Verfahrens in das Session-Initiation-Protokoll.

5. Verfahren nach Anspruch 1, wobei das Tagging (910) der Session-Initiation-Protokoll-Sitzung (140, 240) zur Assoziierung der Session-Initiation-Protokoll-Sitzung (140, 240) mit der bestimmten Anwendung (110, 210, 360, 370, 455) weiter umfasst, Eingeben eines neuen Elements in die Session-Beschreibungs-Protokoll-Parameter, die von dem Session-Initiation-Protokoll ausgehandelt werden.

6. Verfahren nach Anspruch 1, wobei die Modifizierung des bestehenden Elements der Session-Beschreibungs-Protokoll-Parameter, die von dem Session-Initiation-Protokoll ausgehandelt werden, umfasst, Spezifizieren der bestimmten Anwendung (110, 210, 360, 370, 455) als Sitzungsname, wenn die Session-Beschreibungs-Protokoll-Parameter der Session-Initiation-Protokoll-Sitzung (140, 240) ausgehandelt werden.

7. Verfahren nach einem der Ansprüche 1 - 6, welches weiter umfasst, Eingeben (1120) neuer Daten oder eines neuen Medientyps, die nicht vordefinierte Rich-Verbindungsdienst-Daten-Transaktionen sind, indem weitere Parameter geliefert werden, die die neuen Daten oder den Medientyp in einem Session-Beschreibungs-Protokoll-Parameter-Bereich beschreiben, wenn eine neue Verbindung initiiert wird oder wenn der neue Mediendaten-Typ in eine neuen Verbindung eingegeben wird.

8. Verfahren nach Anspruch 1 - 7, welches weiter umfasst, Sichern (1220) von Benutzer-Terminalen vor unerwünschten Rich-Verbindungsdienst-Anwendungen indem jede Anwendung eine gültige Berechtigung zum Abrufen eines Rich-Verbindungsdienst-Services hält.

9. Verfahren nach einem der Ansprüche 1 - 8, welches weiter umfasst, Modifizieren (950, 1050) einer Alt-Rich-Verbindungsdienst-Anwendung (450) durch Hinzufügen eines Session-Initiation-Protokoll-Sitzungsmanagers (415), der jede Session-Initiation-Protokoll-Sitzung (140, 240) überprüft, um zu bestimmten, ob die Session-Initiation-Protokoll-Nachrichten für die Alt-Rich-Verbindungsdienst-Anwendung (450) gedacht sind, und Routen der Session-Initiation-Protokoll-Nachrichten, die für die Alt-Rich-Verbindungsdienst-Anwendung (450) gedacht sind, zu der Alt-Rich-Verbindungsdienst-Anwendung (450) und Routen aller verbleibenden Session-Initiation-Protokoll-Nachrichten zu dem Verbindungs-Manager (310, 410).

10. Verfahren nach Anspruch 9, wobei die bestimmten Anwendung (210, 360, 370, 455) und die Alt-Rich-Verbindungsdienst-Anwendung (450) den gleichen Session-Initiation-Protokoll-Stack (420) teilen.

11. Einrichtung, die ausgestaltet ist das Verfahren nach einem der Ansprüche 1 - 10 durchzuführen.

## Revendications

1. Procédé d'association de messages de protocole d'amorce de session avec une application spécifique (210, 360, 370, 455) s'exécutant sur différents terminaux d'utilisateur, le procédé comprenant de :
étiqueter (810, 910, 1010, 1110, 1210) une session de protocole d'amorce de session (140, 240) pour associer la session de protocole d'amorce de session (140, 240) avec l'application spécifique (110, 210, 360, 370, 455) en modifiant un élément existant des paramètres de protocole de description de session lors de la négociation des paramètres de protocole de description de session de la session de protocole d'amorce de session (140, 240) ;
utiliser (830, 930, 1030) un gestionnaire de conduit (310, 410) pour faire concorder des sessions de protocole d'amorce de session (140, 240) avec l'application spécifique (110, 210, 360, 370, 455) lorsqu'il y a des applications multiples (110, 210, 360, 370, 455) partageant une même session de protocole d'amorce de session entre les terminaux d'utilisateur ; et
associer (860, 960, 1060, 1130, 1230) des messages de protocole d'amorce de session pour la session de protocole d'amorce de session (140, 240) avec l'application spécifique (110, 210, 360, 370, 455) selon l'étiquette.

2. Procédé selon la revendication 1, dans lequel l'étiquetage (810) de la session de protocole pour associer la session de protocole d'amorce de session (140, 240) avec l'application spécifique (110, 210, 360, 370, 455) comprend en outre de modifier un élément existant dans un en-tête du protocole d'amorce de session.

3. Procédé selon la revendication 1, dans lequel l'étiquetage (910) de la session de protocole pour associer la session de protocole d'amorce de session (140, 240) avec l'application spécifique (110, 210, 360, 370, 455) comprend en outre d'ajouter un nouvel élément à un en-tête du protocole d'amorce de session.

4. Procédé selon la revendication 1, dans lequel l'étiquetage (910) de la session de protocole pour associer la session de protocole d'amorce de session (140, 240) avec l'application spécifique (110, 210, 360, 370, 455) comprend en outre d'ajouter un nouveau procédé au protocole d'amorce de session.

5. Procédé selon la revendication 1, dans lequel l'étiquetage (1010) de la session de protocole pour associer la session de protocole d'amorce de session (140, 240) avec l'application spécifique (110, 210, 360, 370, 455) comprend en outre d'ajouter un nouvel élément aux paramètres de protocole de description de session négociés par le protocole d'amorce de session.

6. Procédé selon la revendication 1, dans lequel la modification de l'élément existant des paramètres de protocole de description de session négociés par le protocole d'amorce de session comprend de spécifier l'application spécifique (110, 210, 360, 370, 455) comme un nom de session lors de la négociation des paramètres de protocole de description de session de la session de protocole d'amorce de session (140, 240).

7. Procédé selon une quelconque des revendications 1-6, comprenant en outre d'ajouter (1120) un nouveau type de données ou de médias qui n'est pas une des transactions de données de services de communication enrichie prédéfinis en fournissant des paramètres additionnels qui décrivent le nouveau type de données ou de médias dans une section de paramètres de protocole de description de session lors de l'amorce d'un nouveau conduit ou de l'ajout du nouveau type de donnés média à un conduit existant.

8. Procédé selon une quelconque des revendications 1-7 comprenant en outre de sécuriser (1220) des terminaux d'utilisateur contre des applications de services de communication enrichie non souhaitées par chaque application détenant une permission valide d'accéder à un service des services de communication enrichie.

9. Procédé selon une quelconque des revendications 1-8 comprenant en outre de modifier (950, 1050) une application existante de service de communication enrichie (450) en ajoutant un gestionnaire de session de protocole d'amorce de session (415) vérifiant chaque session de protocole d'amorce de session (140, 240) pour déterminer si les messages de protocole d'amorce de session sont prévus pour l'application existante de services de communication enrichie (450) et router les messages de protocole d'amorce de session prévus pour l'application existante de services de communication enrichie (450) vers ladite application existante de services de communication enrichie (450) et router tous les messages restants de protocole d'amorce de session vers le gestionnaire de conduit (310, 410).

10. Procédé selon la revendication 9, dans lequel l'application spécifique (210, 360, 370, 455) et l'application existante de services de communication enrichie (450) partagent la même pile de protocole d'amorce de session (420) et le même enregistrement.

11. Dispositif configuré pour mettre en oeuvre le procédé selon une quelconque des revendications 1 à 10.
